(19) **Europäisches Patentamt / European Patent Office / Office européen des brevets**

(11) **EP 4 707 237 A1**

(12) # EUROPEAN PATENT APPLICATION
published in accordance with Art. 153(4) EPC

(43) Date of publication:
**11.03.2026 Bulletin 2026/11**

(21) Application number: **24904399.3**

(22) Date of filing: **12.12.2024**

(51) International Patent Classification (IPC):
*C01B 32/21* (2017.01)   *C01B 33/113* (2006.01)
*H01M 4/36* (2006.01)   *H01M 4/48* (2010.01)
*H01M 4/583* (2010.01)   *H01M 10/052* (2010.01)
*H01M 4/02* (2006.01)

(52) Cooperative Patent Classification (CPC):
**C01B 32/21; C01B 33/02; C01B 33/113;**
**H01M 4/02; H01M 4/36; H01M 4/48; H01M 4/583;**
**H01M 4/587; H01M 10/052; H01M 10/0525;**
**Y02E 60/10**

(86) International application number:
**PCT/KR2024/096820**

(87) International publication number:
**WO 2025/127834 (19.06.2025 Gazette 2025/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.12.2023 KR 20230179544**

(71) Applicant: **LG Energy Solution, Ltd.**
**Seoul 07335 (KR)**

(72) Inventors:
• **KIM, Taeho**
  **Daejeon 34122 (KR)**

• **LEE, Seunggwan**
  **Daejeon 34122 (KR)**
• **KIM, Gunwoo**
  **Daejeon 34122 (KR)**
• **SHIN, Sun Young**
  **Daejeon 34122 (KR)**
• **LEE, Yong Ju**
  **Daejeon 34122 (KR)**

(74) Representative: **Hoffmann Eitle**
**Patent- und Rechtsanwälte PartmbB**
**Arabellastraße 30**
**81925 München (DE)**

(54) **SILICON CARBON COMPOSITE, NEGATIVE ELECTRODE ACTIVE MATERIAL, NEGATIVE ELECTRODE COMPOSITION, NEGATIVE ELECTRODE, AND SECONDARY BATTERY**

(57) The present invention relates to: a silicon carbon composite having a peak A present in a range of 130 ppm to 150 ppm, a peak B present in a range of 110 ppm to 130 ppm, and a peak C present in a range of 15 ppm to 40 ppm during 13C-NMR analysis, and satisfying equation 1 below; a negative electrode active material comprising same; a negative electrode composition; a negative electrode; a lithium secondary battery; a battery module; and a battery pack. [Equation 1] $0.3 \leq$ peak C intensity/(-peak A intensity + peak B intensity) $\leq 2.1$.

EP 4 707 237 A1

[Figure 1]

## Example 1

**Description**

**Technical Field**

This application claims priority to and the benefit of Korean Patent Application No. 10-2023-0179544 filed in the Korean Intellectual Property Office on December 12, 2023, the entire contents of which are incorporated herein by reference.

The present application relates to a silicon carbon composite, a negative electrode active material including the same, a negative electrode including the negative electrode active material, and a secondary battery including the negative electrode.

**BACKGROUND ART**

Recently, with the rapid spread of electronic devices using batteries, such as mobile phones, laptop computers, electric vehicles, electrically-powered tools and cleaners, the demand for small, lightweight, and relatively high-capacity and/or high-output secondary batteries is rapidly increasing. In particular, a lithium secondary battery is in the limelight as a driving power source for electronic devices because it is lightweight and has a high energy density. Accordingly, research and development efforts to improve the performance of the lithium secondary battery are being actively conducted.

In general, a lithium secondary battery includes a positive electrode, a negative electrode, a separator interposed between the positive electrode and the negative electrode, an electrolyte, an organic solvent, and the like. In addition, the positive electrode and the negative electrode may be formed on current collectors with active material layers each including a positive electrode active material and a negative electrode active material. In general, for the positive electrode, a lithium-containing metal oxide such as $LiCoO_2$ and $LiMn_2O_4$ is used as the positive electrode active material, and for the negative electrode, a carbon-based active material or a silicon-based active material that does not contain lithium is used as the negative electrode active material.

Batteries using graphite as a negative electrode active material can exhibit a high discharge voltage of 3.6 V, but there is a limit to increasing an energy density due to low capacity.

On the other hand, silicon-based active materials have high capacity and efficiency and are attracting attention as next-generation negative electrode active materials. Therefore, there is a demand for development of silicon-based active materials with high capacity or efficiency characteristics.

**SUMMARY OF THE INVENTION**

Technical problem to be solved

An exemplary embodiment of the present invention has been made in an effort to provide a silicon carbon composite that can be used as a negative electrode active material with excellent capacity and/or efficiency characteristics and a high energy density, a negative electrode active material, a negative electrode composition, a negative electrode, and a lithium secondary battery.

Technical Solution

An exemplary embodiment of the present invention provides a silicon carbon composite having a peak A present within a range of 130 ppm to 150 ppm, a peak B present within a range of 110 ppm to 130 ppm, and a peak C present within a range of 15 ppm to 40 ppm upon 13C-NMR analysis, and having a ratio of an intensity of the peak C to a sum of intensities of the peak A and the peak B (intensity of the peak C/(intensity of the peak B + intensity of the peak A)) of 0.3 to 2.1.

An exemplary embodiment of the present invention provides a negative electrode active material including the silicon carbon composite according to the exemplary embodiment described above.

An exemplary embodiment of the present invention provides a negative electrode composition including the negative electrode active material according to the exemplary embodiment described above.

An exemplary embodiment of the present invention provides a negative electrode including the negative electrode composition according to the exemplary embodiment described above.

An exemplary embodiment of the present invention provides a lithium secondary battery including the negative electrode according to the above-described exemplary embodiment, a positive electrode, and a separator.

An exemplary embodiment of the present invention provides a battery module including the lithium secondary battery according to the exemplary embodiment described above.

An exemplary embodiment of the present invention provides a battery pack including the lithium secondary battery according to the exemplary embodiment described above.

An exemplary embodiment of the present invention provides a battery pack including the battery module according to the exemplary embodiment described above.

Technical Effect

According to the exemplary embodiments of the present invention, it is possible to provide a lithium secondary battery with improved capacity and/or efficiency by using, as a negative electrode active material, the silicon carbon composite in which the peaks present within specific ranges upon 13C-NMR analysis have the specific ratio. In addition, by satisfying the above range, it is possible to improve process compatibility and gas generation problems of aqueous binders that occur in the case of silicon-based active materials.

## BRIEF DESCRIPTION OF THE DRAWINGS

FIG. 1 is a graph showing 13C-NMR analysis results of silicon carbon composites prepared in Example 1.
FIG. 2 is a graph showing 13C-NMR analysis results of silicon carbon composites prepared in Example 2.
FIG. 3 is a graph showing 13C-NMR analysis results of silicon carbon composites prepared in Example 3.
FIG. 4 is a graph showing 13C-NMR analysis results of silicon carbon composites prepared in Example 4.
FIG. 5 is a graph showing 13C-NMR analysis results of silicon carbon composites prepared in Example 5.
FIG. 6 is a graph showing 13C-NMR analysis results of silicon carbon composites prepared in Comparative Example 1.
FIG. 7 is a graph showing 13C-NMR analysis results of silicon carbon composites prepared in Comparative Example 2.
FIG. 8 is a graph showing 13C-NMR analysis results of silicon carbon composites prepared in Comparative Example 3.
FIG. 9 is a graph showing 13C-NMR analysis results of silicon carbon composites prepared in Comparative Example 4.
FIG. 10 is a graph showing 13C-NMR analysis results of silicon carbon composites prepared in Comparative Example 5.
FIG. 11 shows a waveform analysis result based on the 13C-NMR analysis result of the silicon carbon composite.

## DETAILED DESCRIPTION

Hereinafter, the present invention will be described in more detail for better understanding of the present invention. The present invention may be implemented in various different forms, and is not limited to the exemplary embodiments described herein.

It will be further understood that the terms "comprises", "includes" or "have" when used in the present specification specify the presence of stated features, numbers, steps, constitutional elements and/or combinations thereof, but do not preclude the presence or addition of one or more other features, numbers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

It will be further understood that the expression "p to q" as used herein refers to a range that includes both endpoints p and q, meaning p or greater and q or less.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

Hereinafter, preferred embodiments of the present invention will be described in detail. However, it should be understood that the exemplary embodiments of the present invention may be modified in various forms and the scope of the present invention is not limited to the exemplary embodiments described below.

In the present specification, 13C-NMR analysis is performed under the following conditions.

<NMR measurement conditions>

Solid 400MHz WB (wide bore) NMR system
MAS (magic angle spinning) rate: 12.5 kHz
Spectral frequency(sfo1): 100.64 MHz (13C)
Temperature: ambient temperature
13C chemical shift reference: adamantane (s) at 38.6 ppm (of CH group at higher frequency)
Pulse program: 1D CPMG (Carr-Purcell-Meiboom-Gill) MAS
Spectral width (sw): 50 kHz
Acquisition time: 0.96 s
Carrier frequency (o1p) at 70 ppm
Pulse length (p1): 3.5 $\mu$s
Recycle delay (d1):60 s
Number of scans: 1k to 5k

In an exemplary embodiment of the present specification, the CPMG (Carr-Purcell-Meiboom-Gill) spectrum obtained through experiment can generate superimposed echoes using a Python script built into Bruker Topspin 4.1, which can then be Fourier transformed to generate a one-dimensional (1D) spectrum. Spectrum breakup can be performed on the obtained 1D spectrum using Bruker Topspin 4.1.

In the present specification, the intensity of the peak refers to a value obtained by deconvolving the 13C-NMR spectrum by peak, fitting it with a 'Gaussian/Lorentzian' model, and then integrating an area under the obtained Gaussian function graph.

It will be understood that the expression "a peak is located between X ppm and Y ppm" means that the apex of the peak exists within the range of X ppm to Y ppm. Accordingly, when calculating the intensity of the peak, the calculation is not limited to the area strictly between X ppm and Y ppm, but rather considers the entire area of the peak whose apex lies within that range.

Peak deconvolution (waveform analysis) of the spectrum obtained by 1D 13C CPMG MAS NMR measurement was performed using DMFIT (64bit, release#20190125) NMR software, and detailed waveform analysis conditions are as follows.

- . After importing the obtained spectrum into the DMFIT program, 'Gaussian/Lorentzian' is selected as a fitting model for waveform analysis.
- . The parameters used for analysis consist of peak amplitude, peak position, peak full width at half maximum, and Gaussian/Lorentzian fraction (xG/(1-x)L). After setting appropriate initial values, fitting was performed (xG/(1-x)L was fixed to 0.5 (xG/(1-x)L = 0.5))
- . In order to obtain accurate peak intensity, the intensity of the spinning sideband dependent on each peak was introduced into the fitting.
- . The fitting conditions used were nParVar = 15, Step = 1, and Thresh = 0.001, and the fitting was performed repeatedly until an appropriate convergence value was reached.
- . For waveform analysis, three or more main peaks and three spinning sidebands dependent on the peaks were applied to obtain the intensity of each peak.

The spinning sidebands refer to peaks derived from the peak A, peak B, and peak C as the sample is rotated by a magnetic field. In order to prevent the spinning sideband, MAS (Magic Angle Spinning) can be used. If a spinning sideband occurs even with MAS, when calculating the intensity of the peak, a summed value of an area of the main peak and an area of a peak of the spinning sideband derived from the main peak can be calculated as the intensity of each peak.

In an exemplary embodiment of the present specification, the peak of the spinning sideband derived from each peak refers to a peak located at a distance of the MAS rate (12.5 kHz) based on the center of the main peak.

A silicon carbon composite according an exemplary embodiment of the present invention has a peak A present within a range of 130 ppm to 150 ppm, a peak B present within a range of 110 ppm to 130 ppm, and a peak C present within a range of 15 ppm to 40 ppm upon 13C-NMR analysis, and satisfy the following Equation 1:

$0.3 \leq$ (Intensity of peak C) / (Intensity of peak A + Intensity of peak B) $\leq 2.1$ [Equation 1]

wherein, the intensity of peak A is the sum of the areas of peak A and the spinning side bands derived from peak A;

the intensity of peak B is the sum of the areas of peak B and the spinning side bands derived from peak B; and the intensity of peak C is the sum of the areas of peak C and the spinning side bands derived from peak C. If there is no peak C, there is an advantage of high capacity and efficiency. However, if the ratio is less than 0.3, the water-based processability of the slurry may become poor due to the absence of silicon carbide. In addition, if the ratio of the intensity of the peak C to the sum of the intensities is greater than 2.1, a large amount of silicon carbide that does not contribute to capacity efficiency is formed, resulting in low initial performance.

The peak A may be present within a range of 135 ppm to 145 ppm, for example, at 140 ppm, the peak B may be present within a range of 120 ppm to 125 ppm, for example, at 122 ppm, and the peak C may be present within a range of 25 ppm to 27 ppm, for example, at 26 ppm. The peak A is a peak derived from carbon in a fully substituted linear $sp^2$ structure,, the peak B is a peak derived from carbon in an unsubstituted or partially substituted $sp^2$ structure, and the peak C is a peak including $sp^3$ bond and silicon carbide bond.

According to an exemplary embodiment, the silicon carbon composite is a composite of Si and C, in which Si and C (e.g., graphite) are present, respectively. In the present specification, the silicon carbon composite may be denoted as Si/C. The silicon carbon composite may consist of Si and C that are not bonded to each other, but may also contain an additional component as needed. For example, the silicon carbon composite may or may not contain silicon carbide denoted as SiC. When the silicon carbon composite contains silicon carbide, a content thereof is 3 wt% or less. The silicon carbon composite may be present in a crystalline state, an amorphous state, or a mixed state thereof. According to one example, C in the silicon carbon composite may be present in an amorphous state.

According to an exemplary embodiment, the silicon carbon composite may be a particle including a porous carbon particle and silicon provided on at least a portion of an inside and a surface of the porous carbon particle; or a particle including a porous silicon particle and carbon provided on at least a portion of an inside and a surface of the porous silicon particle.

According to an exemplary embodiment, the silicon carbon composite is a particle including a porous carbon particle and silicon provided on at least a portion of an inside and a surface of the porous carbon particle. The silicon may be formed by depositing silicon on the porous carbon particle using silane gas. If necessary, a carbon layer may be further formed on a surface of the silicon carbon composite. By the carbon layer, the conductivity is imparted, and the initial efficiency, life characteristics, and battery capacity characteristics of the secondary battery can be improved. A total amount of the carbon layer may be 5 wt% to 40 wt% based on a total of 100 wt% of the silicon carbon composite particles. The carbon layer may include at least one of amorphous carbon or crystalline carbon.

According to an exemplary embodiment, the silicon carbon composite may be a particle including a porous silicon particle and carbon provided on at least a portion of an inside and a surface of the porous silicon particle. This can be formed by etching silicon oxide to form porous silicon particles, such as a Si matrix, and then coating it with carbon. The description of the carbon layer described above may be applied to the carbon.

In an exemplary embodiment of the present specification, in order to satisfy the peak ratio in a silicon carbon composite material obtained by a method of depositing silicon on porous carbon, at least one of a method of lowering the silicon deposition temperature and a method of lowering the coating temperature in a carbon coating process after manufacturing the silicon carbon composite may be performed.

Specifically, steps of putting carbon-based powder in a tubular electric furnace, creating an inert atmosphere by causing nitrogen gas to flow, gradually increasing the temperature and performing heating at temperatures of 300°C to 500°C, gradually increasing the temperature again and performing heating at temperatures of 800°C to 1000°C may be performed.

Then, powder obtained by heating is mixed with an acid solvent, which is then centrifuged to obtain a precipitate. The obtained powder is neutralized in a basic solvent and then dried to obtain a porous carbon structure. In this case, the temperature at which the carbon-based particles are heated in the basic solvent may be 700°C to 900°C.

The porous carbon structure is put into a horizontal electric furnace and $SiH_4$/He gas is caused to flow at 600°C to 800°C to obtain a silicon carbon composite.

In addition, a step of forming a carbon layer by putting the silicon carbon composite obtained through the above processes into an electric furnace and heat-treating the same and causing hydrocarbon gas to flow at 600°C to 800°Cmay be further included.

In an exemplary embodiment of the present specification, a method of complexing carbon with porous silicon may be performed by at least one of a method of lowering the carbon complexing temperature and a method of lowering the heat treatment temperature of the porous silicon raw material before carbon complexing, so as to satisfy the peak ratio.

Specifically, silicon-based powder is put into a horizontal tube and an inert atmosphere is created by causing argon gas to flow, and then the temperature is gradually increased to induce a disproportionation reaction. In this case, the heat treatment temperature may be 750°C to 1200°C, and specifically 800°C to 1100°C.

Thereafter, steps of taking out the heat-treated $SiO_x$ from the tube, immersing the same in an HF aqueous solution, and stirring the solution to remove $SiO_2$ phase may be performed.

The carbon layer may be formed by drying the obtained porous silicon, and then depositing hydrocarbon gas at 550°C to 850°C by chemical vapor deposition (CVD). The hydrocarbon gas may be at least one hydrocarbon gas selected from the group consisting of methane, ethane, propane, and acetylene.

If the deposition/coating temperature is below the above range, silicon carbide is not formed and the water-based processability of slurry becomes poor.

According to an exemplary embodiment, the silicon carbon composite may be represented by $SiO_xC_y$ (where x is from 0 to 0.5 and y is from 1.0 to 3.0). Specifically, x may be from 0 to 0.3, or from 0.05 to 0.3, and y may be from 1.3 to 2.8, or from 1.5 to 2.7.

If the value of x exceeds the above range, the proportion of silicon oxide in the silicon carbon composite increases, which may lead to an increase in irreversible lithium consumption and result in reduced capacity and efficiency.

In addition, when the value of y falls within the above range, a suitable level of electrical conductivity and silicon content can be achieved, enabling the realization of a high-capacity, long-life secondary battery.

According to an exemplary embodiment, the silicon carbon composite may have a specific surface area of 0.5 to 10 $m^2$/g as measured by a BET method, a pore volume of 0.005 to 0.03 $cm^3$/g, and a pore size of 10 to 20 nm as measured by the BET method. The silicon carbon composite may have a pore volume of 0.005 to 0.03 $cm^3$/g as measured by a mercury penetration method (Hg porosimeter).

According to an exemplary embodiment, the silicon carbon composite may have a $D_{90}$ particle diameter of 5 to 15 $\mu$m, a $D_{50}$ particle diameter of 1 to 10 $\mu$m, a $D_{min}$ of 1 to 3 $\mu$m, and a $D_{max}$ of 17 to 23 $\mu$m. In the present specification, the average particle diameter ($D_{50}$) may be defined as a particle diameter corresponding to 50% of the cumulative volume in the particle diameter distribution curve of particles. The average particle diameter ($D_{50}$) may be measured using, for example, a laser diffraction method. In the laser diffraction method, in general, particle diameters ranging from a submicron region to several millimeters can be measured, and results with high reproducibility and high resolvability can be obtained.

An exemplary embodiment provides a negative electrode active material including the silicon carbon composite according to the exemplary embodiments described above.

An exemplary embodiment provides a negative electrode composition including: the negative electrode active material according to the exemplary embodiment described above; a binder; and a conductive material.

According to an exemplary embodiment, the silicon carbon composite may be included in an amount of 0.1 part by weight to 10 parts by weight, for example, 1 part by weight to 10 parts by weight, based on 100 parts by weight of the negative electrode active material.

According to an exemplary embodiment, the negative electrode active material may further include a carbon-based active material. The carbon-based active material may be included in an amount of 90 parts by weight or more and 99.9 parts by weight or less, for example, 90 parts by weight to 99 parts by weight, based on a total of 100 parts by weight of the negative electrode active material included in the negative electrode composition. The carbon-based active material may include at least one of natural graphite and artificial graphite. When the carbon-based active material includes both natural graphite and artificial graphite, a weight ratio of the artificial graphite and natural graphite may be 1:9 to 9:1, for example, 3:7 to 7:3. For example, based on 100 parts by weight of the carbon-based active material, the content of the natural graphite may be 10 to 70 parts by weight, and the content of the artificial graphite may be 30 to 90 parts by weight.

The natural graphite refers to graphite that occurs naturally, and examples thereof include scaled graphite, scaly graphite, or soil graphite. The natural graphite has the advantages of being abundant, being low in price, having high theoretical capacity and compaction density, and being able to realize high output.

According to one example, spheroidized natural graphite may be used as the natural graphite, and the degree of spheroidization may be 0.9 or more. According to one example, the natural graphite may be spheroidized natural graphite and have a tap density of 0.9 g/cc or more.

In the present specification, the degree of spheroidization may be, when a particle is projected, a value obtained by dividing a circumference of a circle having the same area as a projected image by a circumferential length of the projected image. The degree of spheroidization may be obtained from an SEM image, or alternatively, may be measured using a particle shape analyzer, such as sysmex FPIA3000 available from Malvern. In addition, the crystal size can be confirmed through XRD analysis.

According to an exemplary embodiment of the present invention, the negative electrode composition may further include a binder and a conductive material, and the binder may be an aqueous binder.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon powder, metal powder such as aluminum powder and nickel powder; a conductive whisker such as zinc oxide and potassium titanate; a conductive metal oxide such as titanium oxide; a conductive material such as a polyphenylene derivative, and the like may be used.

According to an exemplary embodiment, the aqueous binder is included in an amount of 1 to 5 wt%, for example, about 3 to 4 wt% based on the solid content of the negative electrode composition, and the conductive material is included in an amount of 0.1 to 2 wt%, for example, about 1 wt% based on the solid content of the negative electrode composition.

An exemplary embodiment of the present invention provides a negative electrode including the negative electrode composition according to the exemplary embodiments described above.

Specifically, the negative electrode may include a negative electrode current collector and a negative electrode active material layer arranged on at least one surface of the negative electrode current collector. The negative electrode active material layer includes the negative electrode composition according to the exemplary embodiments described above.

The negative electrode active material layer may be formed by applying a negative electrode slurry including the negative electrode composition described above to at least one surface of a negative electrode current collector, and drying and roll-pressing the same.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 $\mu$m to 20 $\mu$m. However, the thickness of the current collector is not limited thereto.

The negative electrode slurry may include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

An exemplary embodiment of the present invention provides a lithium secondary battery including the negative electrode according to the above-described exemplary embodiment, a positive electrode, and a separator.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn, and Ta, and satisfies $0.01 \leq c3 \leq 0.1$) or $Li_2Mn_3MO_8$ (where M is at least one selected from the group consisting of Fe, Co, Ni, Cu, and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidenefluoride (PVDF), polyvinylidenefluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

The lithium secondary battery may further include an electrolyte. Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

Another exemplary embodiment of the present invention provides a battery module including the secondary battery as a unit cell, and a battery pack including the same. Since the battery module and the battery pack include the secondary battery having high capacity and high rate and cycle characteristics, the battery module and the battery pack may be used as a power source of a medium to large sized device selected from the group consisting of an electric vehicle, a hybrid electric vehicle, a plug-in hybrid electric vehicle, and a power storage system.

**Mode for Carrying Out the Invention**

Hereinafter, Examples will be described in detail to specifically describe the present specification. However, the Examples according to the present specification may be modified in other forms, and the scope of the present application is not construed as being limited to the following Examples. The Examples of the present application are provided to more completely explain the present specification to one skilled in the art.

**<Example 1>**

**(1) Preparation of Silicon Carbon Composite 1**

$SiO_x$ ($0<x\leq1$) having $D_{50}$ of 6 $\mu$m was put into a horizontal tube, and an inert atmosphere was created by causing argon (Ar) gas to flow at a rate of 1500 sccm for one hour. Then, argon gas was caused to flow at a rate of 150 sccm, and the temperature was increased to 1000°C at a rate of 10°C/min and maintained for 6 hours to induce a disproportionation reaction. The heat-treated $SiO_x$ ($0<x\leq1$) was taken out from the tube and immersed in an HF aqueous solution (20 wt%), which was then stirred at room temperatures for one hour to remove $SiO_2$ phase. The obtained porous silicon was dried in a vacuum oven at 600°C for 12 hours. Thereafter, the dried porous silicon was processed using CVD equipment at 600°C by causing an argon/acetylene mixed gas mixed at a volume ratio of 1:9 to flow at a rate of 100 sccm for 3 hours, resulting in preparation of a final silicon carbon composite.
The elemental composition of the silicon carbon composite, as measured by a carbon-sulfur (CS) analyzer and an oxygen-nitrogen-hydrogen (ONH) analyzer, was determined to be $SiO_{0.05}C_{2.08}$.

**(2) Preparation of Negative Electrode**

A negative electrode slurry was prepared by mixing a negative electrode active material including the prepared silicon carbon composite, natural graphite, and artificial graphite at a weight ratio of 10:15:75; a conductive material including carbon black and SWCNT; and a binder including carboxymethyl cellulose (CMC) and styrene butadiene rubber (SBR) at a weight ratio of 95.3:1:3.6 and adding an appropriate amount of distilled water so that the total solid content was about 46 wt%.
The negative electrode slurry was applied to a Cu metal thin film with a thickness of about 20 $\mu$m, which was then dried at a circulating air temperature of 60°C. Then, the thin film was roll-pressed, dried in a vacuum oven of 130°C for about a day, and punched into a circular shape of 1.4875 cm$^2$ to prepare a negative electrode.

**(3) Preparation of Secondary Battery**

A Li metal thin film punched to be 1.7671 cm$^2$ was used as a positive electrode. A Li coin half-cell was prepared by interposing a porous polyethylene separator between the positive electrode and the negative electrode and injecting an electrolyte solution in which 1M $LiPF_6$ was dissolved in a mixed solution prepared by mixing EMC (methyl ethyl carbonate) and EC (ethylene carbonate) at a mixing ratio of 7:3.

**<Example 2>**

**(1) Preparation of Silicon Carbon Composite 2**

A silicon carbon composite was prepared by the same method as in Example 1, except that the temperature during the disproportionation reaction was set to 900°C to induce the disproportionation reaction.
The elemental composition of the silicon carbon composite, as measured by a carbon-sulfur (CS) analyzer and an oxygen-nitrogen-hydrogen (ONH) analyzer, was determined to be $SiO_{0.05}C_{2.08}$.

**(2) Preparation of Negative Electrode and Secondary Battery**

The negative electrode and the secondary battery were prepared by the same method as in Example 1, except that the silicon carbon composite 2 was used.

**<Example 3>**

**(1) Preparation of Silicon Carbon Composite 3**

A silicon carbon composite was prepared by the same method as in Example 1, except that CVD carbon coating was performed at the temperature of 800°C.
The elemental composition of the silicon carbon composite, as measured by a carbon-sulfur (CS) analyzer and an oxygen-nitrogen-hydrogen (ONH) analyzer, was determined to be $SiO_{0.05}C_{2.22}$.

**(2) Preparation of Negative Electrode and Secondary Battery**

The negative electrode and the secondary battery were prepared in the same method as in Example 1, except that the silicon carbon composite 3 was used.

**<Example 4>**

**(1) Preparation of Silicon Carbon Composite 4**

The cellulose powder was put into a tubular electric furnace, and then heated under a nitrogen atmosphere for 2 hours after increasing the temperature to 400°C at a rate of 4°C/min. Thereafter, after the temperatures of the electric furnace was increased to 900°C at a rate of 4°C/min, the electric furnace was heated under a nitrogen atmosphere for 2 hours. After mixing the above powder with sulfuric acid and nitric acid with a volume ratio of 3:1, the mixture was stirred at 60°C for 2 hours, and centrifuged to obtain a precipitate. The obtained powder was washed five times with a solvent in which ethanol and distilled water were mixed at a volume ratio of 1:3, it was dried at 120°C for 12 hours. The carbon-based particles were put into a KOH solvent, which was then heated under a nitrogen atmosphere at 800°C for 2 hours to obtain a porous carbon structure. After washing the porous carbon structure three times with distilled water and then dried at 120°C for 12 hours or longer. The porous carbon structure was put into a horizontal electric furnace and processed by causing $SiH_4/He(=95/5)$ gas to flow at a flow rate of 50 ml/min at 700°C for 1 hour, resulting in preparation of a silicon carbon composite. The silicon carbon composite was put into an electric furnace and heat-treated at 800°C for 2 hours. Thereafter, the heat-treated silicon carbon composite was put into an electric furnace and subjected to a reaction for 3 hours by causing acetylene to flow at 700°C, resulting in preparation of a negative electrode active material including the silicon carbon composite having a carbon layer on a surface.

The elemental composition of the silicon carbon composite, as measured by a carbon-sulfur (CS) analyzer and an oxygen-nitrogen-hydrogen (ONH) analyzer, was determined to be $SiO_{0.03}C_{2.15}$.

**(2) Preparation of Negative Electrode and Secondary Battery**

The negative electrode and the secondary battery were prepared in the same method as in Example 1, except that the silicon carbon composite 4 was used.

**<Example 5>**

**(1) Preparation of Silicon Carbon Composite 5**

A silicon carbon composite was prepared by the same method as in Example 4, except that the surface carbon layer was formed with acetylene gas at 550°C.

The elemental composition of the silicon carbon composite, as measured by a carbon-sulfur (CS) analyzer and an oxygen-nitrogen-hydrogen (ONH) analyzer, was determined to be $SiO_{0.04}C_{2.38}$.

**(2) Preparation of Negative Electrode and Secondary Battery**

The negative electrode and the secondary battery were prepared in the same method as in Example 1, except that the silicon carbon composite 5 was used.

**<Comparative Example 1>**

**(1) Preparation of Silicon Carbon Composite 6**

A silicon carbon composite was prepared by the same method as in Example 1, except that the temperature during the disproportionation reaction was set to 700°C to induce the disproportionation reaction.

**(2) Preparation of Negative Electrode and Secondary Battery**

The negative electrode and the secondary battery were prepared by the same method as in Example 1, except that the silicon carbon composite 6 was used.

**<Comparative Example 2>**

## (1) Preparation of Silicon Carbon Composite 7

A silicon carbon composite was prepared by the same method as in Example 4, except that SiH$_4$/He(=95/5) gas was used at 600°C to prepare the silicon carbon composite and the surface carbon coating layer was not formed.

## (2) Preparation of Negative Electrode and Secondary Battery

The negative electrode and the secondary battery were prepared by the same method as in Example 1, except that the silicon carbon composite 7 was used.

### <Comparative Example 3>

## (1) Preparation of Silicon Carbon Composite 8

A crosslinkable composition was prepared by mixing 775 g of DVB570 (a product of Shin-il Chemi Co., Ltd., primarily composed of 57.0 wt% divinylbenzene and 38.9 wt% vinyl ethylbenzene, with the divinylbenzene content in the main components being approximately 60 wt%) with 531 g of methylhydrogensiloxane terminated at both ends with trimethylsiloxy groups (having a viscosity of 20 mPa·s and a hydrogen content bonded to silicon atoms of 1.58 wt%), in an amount such that the number of Si-H groups in the copolymer would be about 1 mol per 1 mol of vinyl groups in the DVB570. To this mixture, 10 ppm (as platinum metal) of a platinum catalyst in the form of a 1,3-divinyltetramethyldisiloxane complex was added.

The resulting composition was then cured in air at 120°C to prepare a cured product.

Subsequently, 969 g of the cured product was placed into an SSA-S grade alumina boat, which was then inserted into a pre-treatment furnace. The furnace was maintained under reduced pressure for 10 minutes, followed by restoration to atmospheric pressure using high-purity nitrogen (99.99%). This degassing process was repeated once. Then, while supplying high-purity nitrogen at a flow rate of 2 L/min, the temperature was raised at a rate of 2°C/min, and calcination was carried out at 600°C for 2 hours.

Next, 591 g of the calcined product was placed into an SSA-S grade alumina boat and introduced into a muffle furnace. The furnace was held under reduced pressure for 60 minutes, followed by restoration to atmospheric pressure using high-purity nitrogen (99.99%). This operation was also repeated once. Then, while supplying high-purity argon at a flow rate of 100 mL/min, the temperature was increased at a rate of 5°C/min, and calcination was performed at 1000°C for 1 hour to obtain a calcined product.

The obtained calcined product was pulverized using a jet mill, and subsequently classified using a precision air classifier to obtain the silicon carbon composite.

The elemental composition of the silicon carbon composite, as measured by a carbon-sulfur (CS) analyzer and an oxygen-nitrogen-hydrogen (ONH) analyzer, was determined to be $SiO_{1.53}C_{1.46}$.

## (2) Preparation of Negative Electrode and Secondary Battery

The negative electrode and the secondary battery were prepared by the same method as in Example 1, except that the silicon carbon composite 8 was used.

### <Comparative Example 4>

## (1) Preparation of Silicon Carbon Composite 9

Crystalline silicon (pure Si) with low crystallinity was first pulverized into fine particles. The pulverized silicon was then placed into a furnace and reacted at 400°C for 2 hours under an oxygen atmosphere. Separately, pitch-based carbon was pulverized, and then mixed with the silicon at 60°C for 3 hours. The resulting mixture was transferred to a reactor and heat-treated at 600°C. The heat-treated silicon carbon composite was then ground using a pulverizer to achieve a D50 particle size of approximately 12 $\mu$m. The pulverized Si/C negative electrode active material was subsequently introduced into a furnace, where acetylene gas was flowed at 950°C for 3 hours to form a carbon coating layer on the surface.

The carbon-coated Si/C active material was further processed using a pulverizer to obtain a final Si/C negative electrode active material with a D50 particle size of 6 $\mu$m.

The elemental composition of the resulting silicon carbon composite, as measured by a carbon-sulfur (CS) analyzer and an oxygen-nitrogen-hydrogen (ONH) analyzer, was determined to be $SiO_{1.1}C_{5.6}$.

**(2) Preparation of Negative Electrode and Secondary Battery**

The negative electrode and the secondary battery were prepared by the same method as in Example 1, except that the silicon carbon composite 9 was used.

**<Comparative Example 5>**

**(1) Preparation of Silicon Carbon Composite 10**

Except that dried porous silicon was treated by flowing a mixed gas of argon and acetylene (in a volume ratio of 1:9) at a flow rate of 100 sccm for 3 hours at 300°C, the material was prepared in the same manner as in Example 1.

**(2) Preparation of Negative Electrode and Secondary Battery**

The negative electrode and the secondary battery were prepared by the same method as in Example 1, except that the silicon carbon composite 10 was used.

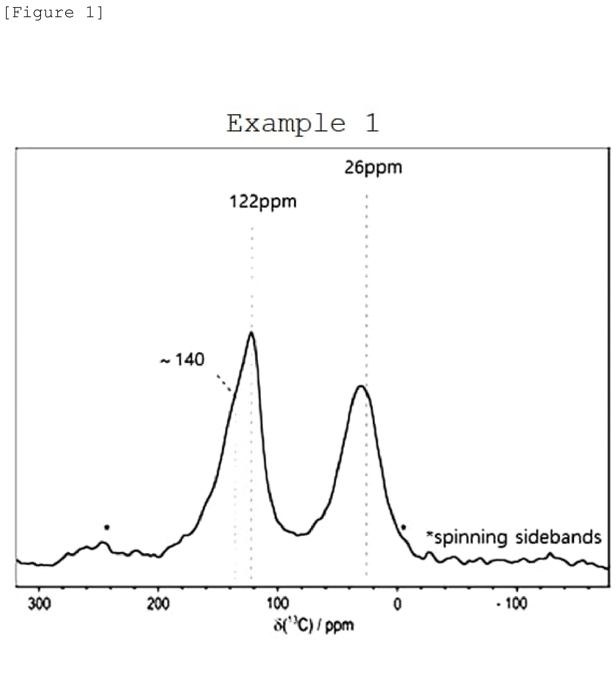

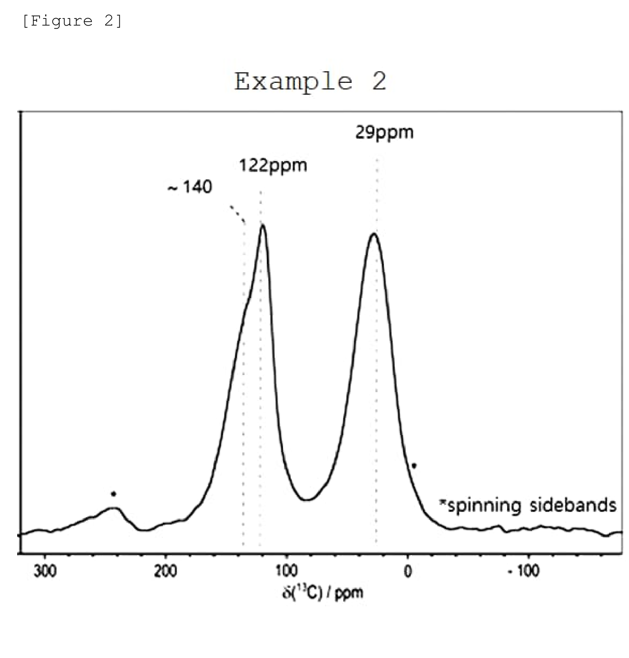

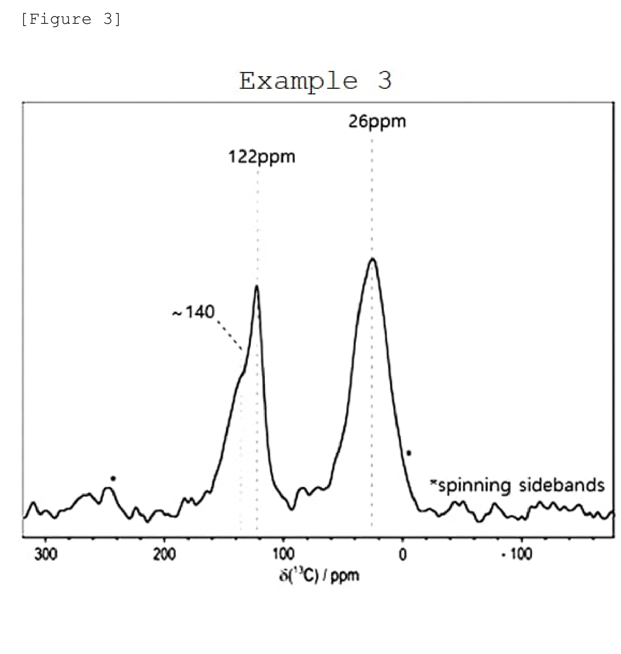

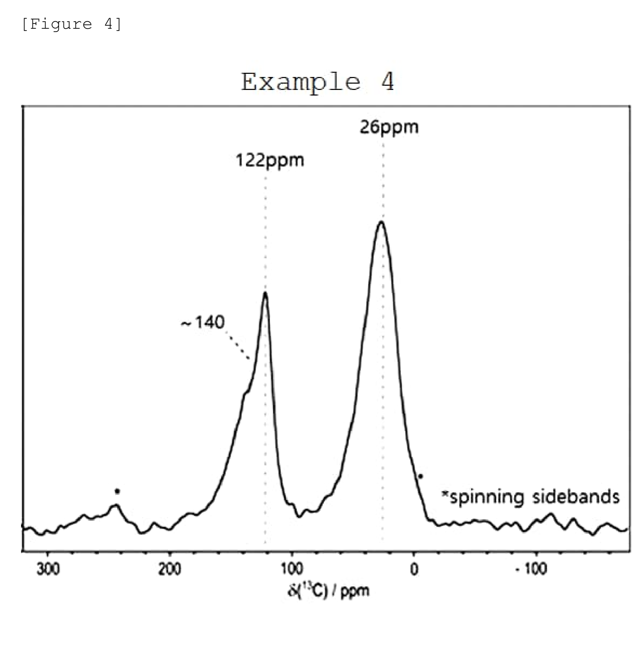

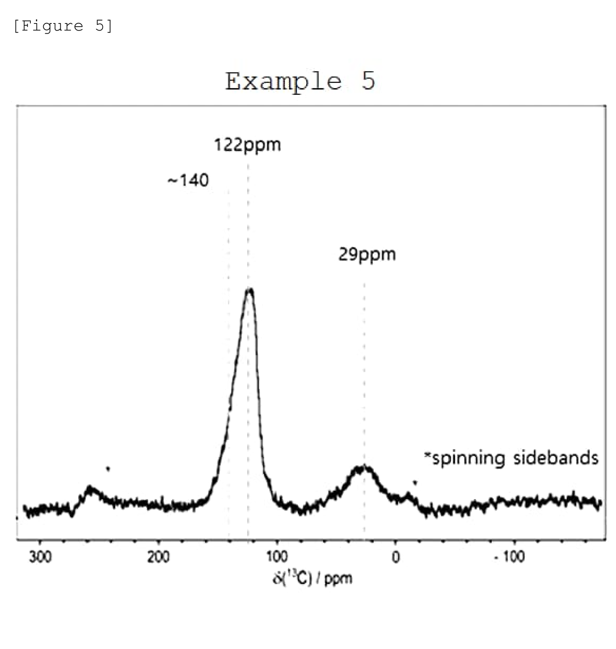

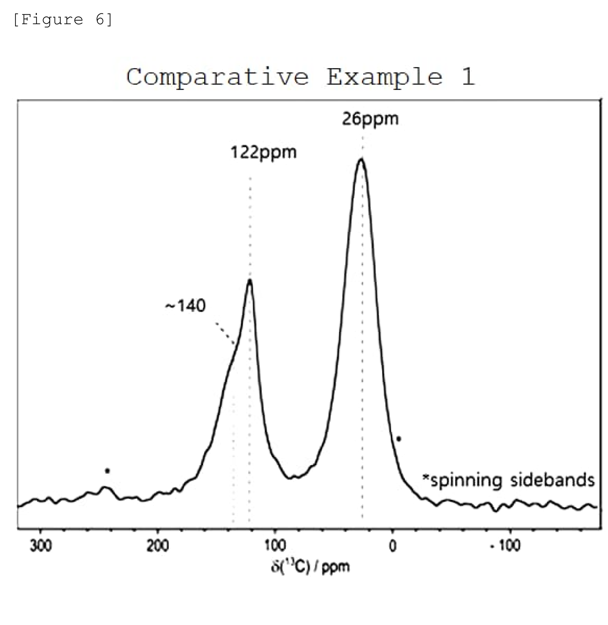

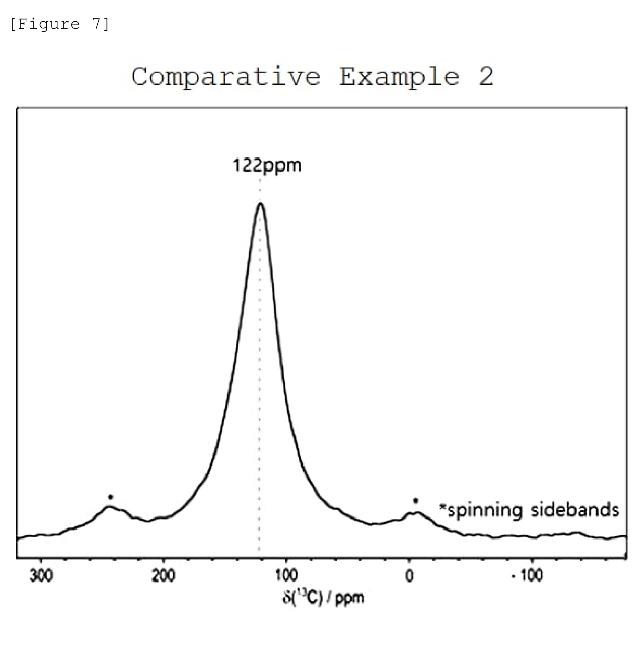

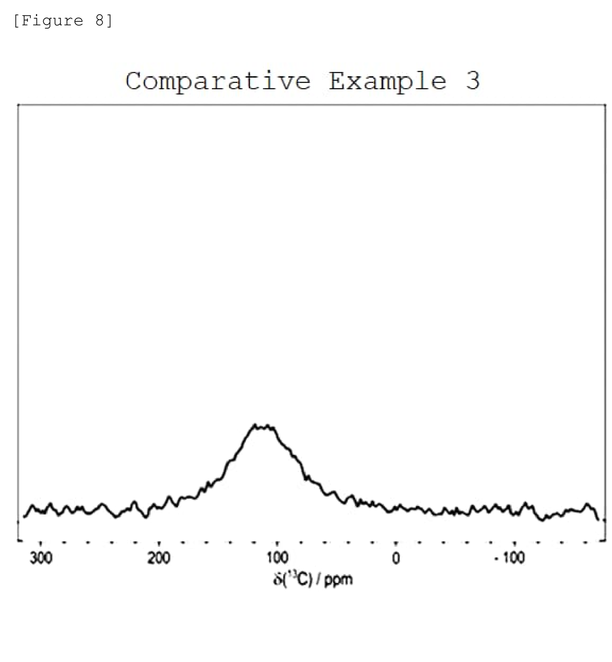

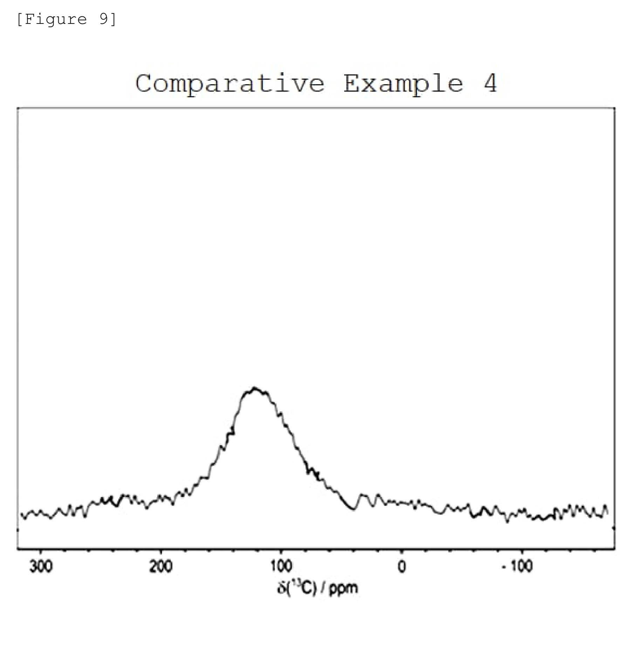

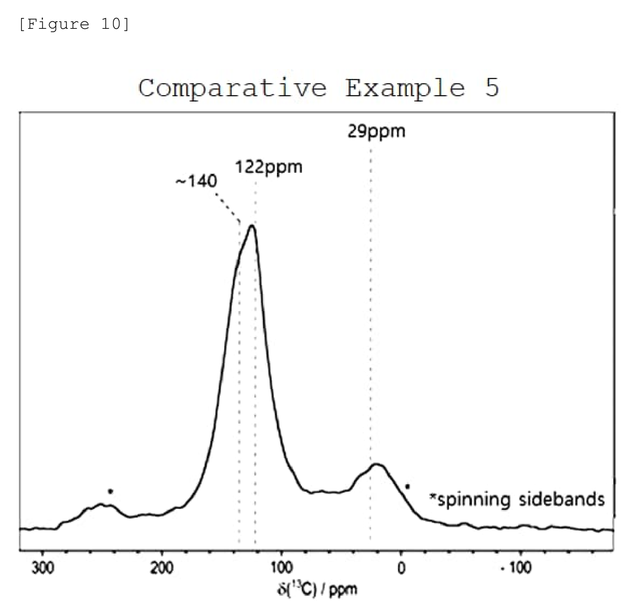

The results of 13C-NMR analysis of the negative electrode active materials prepared in the above Examples and Comparative Examples are shown in FIGS. 1 to 10 and Table 1 below.

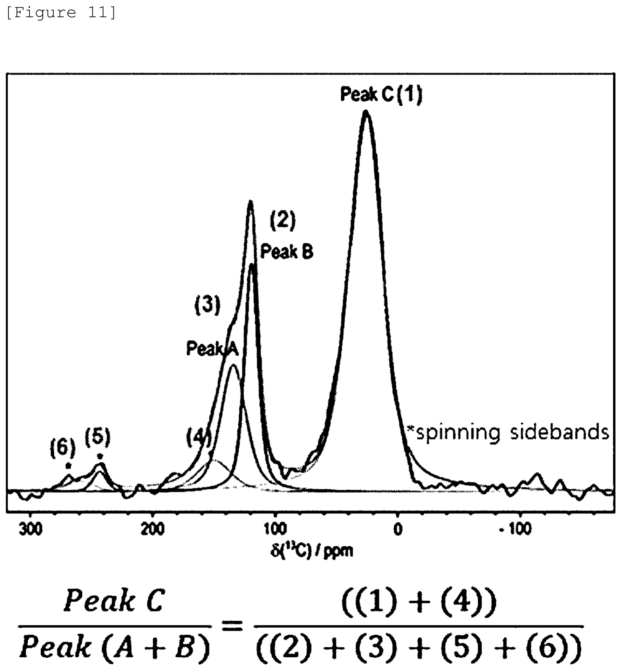

Specifically, as shown in FIG. 11, the waveform of the 13C-NMR spectrum of each negative electrode active material was analyzed through Gaussian/Lorentzian fitting, and the intensity of peak C/(intensity of peak B + intensity of peak A) was calculated using values obtained by integrating the areas under the graphs of peak A, peak B, and peak C obtained by waveform analysis and the areas under the spinning sideband peaks derived from the respective peaks.

[Table 1]

|  | Peak A | Peak B | | Peak C | | ratio | |
|---|---|---|---|---|---|---|---|
|  | Position (ppm) | Intensity (Based on the intensity of peak B) | Position (ppm) | Intensity (Based on the intensity of peak B) | Position (ppm) | Intensity (Based on the intensity of peak B) | Peak C/Peak (A+B) |
| Example 1 | 135 | 0.81 | 120 | 1 | 26 | 2.3 | 1.28 |
| Example 2 | 135 | 0.8 | 120 | 1 | 26 | 2.4 | 1.31 |
| Example 3 | 135 | 0.65 | 120 | 1 | 26 | 2.6 | 1.60 |
| Example 4 | 135 | 0.67 | 120 | 1 | 26 | 3.4 | 2.02 |
| Example 5 | 135 | 0.41 | 120 | 1 | 26 | 0.88 | 0.62 |
| Comparative Example 1 | 135 | 0.73 | 122 | 1 | 26 | 3.8 | 2.22 |
| Comparative Example 2 | - | 0 | 122 | 1 | - | 0 | 0 |
| Comparative Example 3 | 135 | 0.10 | 118 | 1 | - | 0 | 0 |
| Comparative Example 4 | 135 | 0.08 | 122 | 1 | - | 0 | 0 |
| Comparative Example 5 | 137 | 0.89 | 124 | 1 | 27 | 0.18 | 0.095 |

The discharge capacity, initial efficiency, capacity retention rate, and slurry viscosity change rate of the Examples and Comparative Examples were measured and listed in Table 2 below.

**<Discharge Capacity, Initial Efficiency, and Capacity Retention Rate>**

The charging and discharging were performed at 0.1C for the first cycle and the second cycle, and the charging and discharging were performed at 0.5C from the third cycle to the 299th cycle. At the 300th cycle, the charge and discharge were terminated in a charge state (a state in which lithium ions were put in the negative electrode).

Charging conditions: CC (constant current)/CV (constant voltage) (5 mV/0.005 C current cut-off)

Discharging conditions: CC (constant current) condition 1.5V

The discharge capacity (mAh/g) and the initial efficiency (%) were derived from the result after charging and discharging for first time. Specifically, the initial efficiency (%) was derived by the following calculation.

Initial efficiency (%) = (first time discharge capacity/first time charge capacity) $\times$ 100%

The capacity retention rate was derived by the following calculation.

Capacity retention rate (%) = (299th time discharge capacity/first time discharge capacity) $\times$ 100%

**<Slurry Viscosity Change Rate>**

To measure the slurry viscosity change rate, a slurry was prepared by mixing graphite, the silicon carbon composite, carbon black, CMC, and PAA at a weight ratio of 77:20:1:1:1. For the prepared slurry, the shear viscosity at shear rate = 1Hz was measured, and the amounts of change thereof over time was compared.

The amount of change (%) in shear viscosity was derived by the following calculation formula.

Amount of change (%) in shear viscosity = ((shear viscosity of slurry after 2 days - shear viscosity of slurry immediately after mixing)/shear viscosity of slurry immediately after mixing) $\times$ 100%

**<Pouch volume change rate>**

Graphite: the silicon carbon composite: carbon black: CMC: PAA were mixed in a weight ratio of 77: 20: 1: 1: 1 to prepare a slurry, and 20 g of the prepared slurry was placed in a pouch, sealed, then stored at 40°C for 2 days. The volume was measured and the change rate was compared.

[Table 2]

| | Discharg e capacity (mAh/g) | Initial efficien cy (%) | Capacity retention rate (%) | Slurry viscosit y change rate (%, after 2 days) | Pouch volume change rate (%, @40°C, after 2 days) |
|---|---|---|---|---|---|
| Example 1 | 504 | 91.3 | 89.0 | -0.3 | 0.0 |
| Example 2 | 502 | 91.0 | 88.9 | -0.1 | 0.0 |
| Example 3 | 504 | 90.9 | 88.1 | -0.2 | 0.0 |
| Example 4 | 504 | 91.1 | 88.5 | -1.4 | 0.1 |
| Example 5 | 503 | 91.3 | 88.3 | -2.1 | 0.7 |
| Comparative Example 1 | 450 | 88.9 | 83.6 | -0.7 | 0.3 |
| Comparative Example 2 | 503 | 88.0 | 84.7 | -51.7 | 34.1 |
| Comparative Example 3 | 448 | 88.1 | 80.9 | -5.8 | 2.3 |
| Comparative Example 4 | 476 | 88.5 | 80.2 | -4.9 | 4.4 |
| Comparative Example 5 | 482 | 87.4 | 81.8 | -10.1 | 7.5 |

As shown in Table 2, it can be confirmed that Examples 1 to 5 in which the ratio of the intensity of peak C to the sum of the intensities of peak A and peak B (intensity of peak C/(intensity of peak B + intensity of peak A)) satisfies the range of 0.3 to 2.1 showed high capacity and efficiency and little changes in the slurry viscosity change rate and pouch volume change rate.

In Comparative Example 1 corresponding to a case where the ratio of the intensity of peak C to the sum of the intensities of peak A and peak B (intensity of peak C/(intensity of peak B + intensity of peak A)) exceeds 2.1, it can be confirmed that silicon carbide is formed excessively, and accordingly, the effect is inferior to Examples 1 to 5 in terms of capacity efficiency and cycle capacity although there is no significant difference from Examples 1 to 5 in terms of water-based processability.

In Comparative Example 2 corresponding to a case where the ratio of the intensity of peak C to the sum of the intensities of peak A and peak B (intensity of peak C/(intensity of peak B + intensity of peak A)) is less than 0.3, it can be confirmed that the slurry viscosity change rate and the pouch volume change rate are greater compared to Examples 1 to 5. This means that silicon carbide is not formed and the water-based processability of slurry is poor.

In Comparative Examples 3 and 4, the silicon carbon composites with elemental compositions of $SiO_{1.53}C_{1.46}$ and $SiO_{1.1}C_{5.6}$, respectively, did not satisfy the appropriate silicon-to-oxygen elemental ratio of the present invention, resulting in the inadequate formation of $sp^2$ bonds in the carbon. As a result, the 13C-NMR analysis showed a very small A peak and the absence of the C peak. Consequently, these examples exhibited inferior performance in terms of capacity, capacity retention, and slurry processability compared to Examples 1 to 5.

In Comparative Example 5, the carbon coating process was carried out at a lower temperature, preventing the proper formation of silicon carbide on the surface of the silicon carbon composite. As a result, the intensity of the C peak was significantly reduced. This led to inferior slurry processability compared to Examples 1 to 5.

**Claims**

1. A silicon carbon composite having a peak A present within a range of 130 ppm to 150 ppm, a peak B present within a range of 110 ppm to 130 ppm, and a peak C present within a range of 15 ppm to 40 ppm upon 13C-NMR analysis, and satisfying the following Equation 1:

   $$0.3 \leq \text{(Intensity of peak C) / (Intensity of peak A + Intensity of peak B)} \leq 2.1 \qquad \text{[Equation 1]}$$

   wherein, the intensity of peak A is the sum of the areas of peak A and the spinning side bands derived from peak A;

   the intensity of peak B is the sum of the areas of peak B and the spinning side bands derived from peak B; and
   the intensity of peak C is the sum of the areas of peak C and the spinning side bands derived from peak C.

2. The silicon carbon composite of claim 1, wherein the peak A is present within a range of 135 ppm to 145 ppm, the peak B is present within a range of 120 ppm to 125 ppm, and the peak C is present within a range of 23 ppm to 27 ppm.

3. The silicon carbon composite of claim 1, wherein the silicon carbon composite is a particle comprising a porous carbon particle and silicon provided on at least a portion of an inside and a surface of the porous carbon particle, or a particle comprising a porous silicon particle and carbon provided on at least a portion of an inside and a surface of the porous silicon particle.

4. The silicon carbon composite of claim 1, wherein the silicon carbon composite is represented by SiOxCy (where x is from 0 to 0.5, and y is from 1.0 to 3.0).

5. A negative electrode active material comprising the silicon carbon composite of any one of claims 1 to 4.

6. A negative electrode composition comprising:

   the negative electrode active material of claim 5;
   a binder; and
   a conductive material.

7. The negative electrode composition of claim 6, wherein the negative electrode active material further comprises a carbon-based active material.

8. The negative electrode composition of claim 7, wherein the silicon carbon composite is included in an amount of 0.1 part by weight to 10 parts by weight based on 100 parts by weight of the negative electrode active material.

9. The negative electrode composition of claim 7, wherein the carbon-based active material comprises at least one of artificial graphite and natural graphite.

10. A negative electrode comprising the negative electrode composition of claim 6.

11. A lithium secondary battery comprising:

    the negative electrode of claim 10;
    a positive electrode; and

a separator.

12. A battery module comprising the lithium secondary battery of claim 11.

13. A battery pack comprising the lithium secondary battery of claim 11.

14. A battery pack comprising the battery module of claim 12.

[Figure 1]

Example 1

[Figure 2]

Example 2

[Figure 3]

Example 3

[Figure 4]

Example 4

[Figure 5]

Example 5

[Figure 6]

Comparative Example 1

[Figure 7]

## Comparative Example 2

122ppm

*spinning sidebands

$\delta(^{13}C)$ / ppm

[Figure 8]

Comparative Example 3

[Figure 9]

Comparative Example 4

[Figure 10]

Comparative Example 5

[Figure 11]

$$\frac{Peak\ C}{Peak\ (A+B)} = \frac{((1)+(4))}{((2)+(3)+(5)+(6))}$$

## INTERNATIONAL SEARCH REPORT

| International application No. |
| --- |
| **PCT/KR2024/096820** |

### A. CLASSIFICATION OF SUBJECT MATTER

**C01B 32/21**(2017.01)i; **C01B 33/113**(2006.01)i; **H01M 4/36**(2006.01)i; **H01M 4/48**(2010.01)i; **H01M 4/583**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

C01B 32/21(2017.01); C01B 32/00(2017.01); C01B 32/05(2017.01); C01B 32/306(2017.01); C01B 32/354(2017.01); H01M 10/052(2010.01); H01M 4/36(2006.01); H01M 4/38(2006.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘 카본 복합체(silicon carbon composite), 다공성 탄소(porous carbon), 다공성 실리콘(porous silicon), 13C NMR, 음극 활물질(negative electrode active material), 리튬이차전지(lithium secondary battery)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2023-0131648 A (SK ON CO., LTD.) 14 September 2023 (2023-09-14) See paragraphs [0002], [0027], [0033]-[0034], [0062]-[0064] and [0123]-[0126]; example 1; and table 1. | 1-14 |
| A | KR 10-2022-0091672 A (DAE JOO ELECTRONIC MATERIALS CO., LTD.) 01 July 2022 (2022-07-01) See entire document. | 1-14 |
| A | KR 10-2018-0113187 A (ENERG2 TECHNOLOGIES, INC. et al.) 15 October 2018 (2018-10-15) See entire document. | 1-14 |
| A | KR 10-2023-0082028 A (GROUP14 TECHNOLOGIES, INC.) 08 June 2023 (2023-06-08) See entire document. | 1-14 |

☑ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **31 March 2025** | **31 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 707 237 A1**

**INTERNATIONAL SEARCH REPORT**

International application No.

**PCT/KR2024/096820**

**C.    DOCUMENTS CONSIDERED TO BE RELEVANT**

| Category* | Citation of document, with indication, where appropriate, of the relevant passages | Relevant to claim No. |
|---|---|---|
| A | WO 2023-093893 A1 (LANXI ZHIDE ADVANCED MATERIALS CO., LTD.) 01 June 2023 (2023-06-01)<br>    See entire document. | 1-14 |

Form PCT/ISA/210 (second sheet) (July 2022)

## INTERNATIONAL SEARCH REPORT
### Information on patent family members

International application No.

**PCT/KR2024/096820**

| Patent document cited in search report | | | Publication date (day/month/year) | Patent family member(s) | | | Publication date (day/month/year) |
|---|---|---|---|---|---|---|---|
| KR | 10-2023-0131648 | A | 14 September 2023 | CN | 116722140 | A | 08 September 2023 |
| | | | | EP | 4243119 | A1 | 13 September 2023 |
| | | | | US | 2023-0282812 | A1 | 07 September 2023 |
| KR | 10-2022-0091672 | A | 01 July 2022 | CN | 116867737 | A | 10 October 2023 |
| | | | | EP | 4269341 | A1 | 01 November 2023 |
| | | | | EP | 4269341 | A4 | 09 October 2024 |
| | | | | JP | 2024-501825 | A | 16 January 2024 |
| | | | | US | 2024-0047659 | A1 | 08 February 2024 |
| | | | | WO | 2022-139243 | A1 | 30 June 2022 |
| KR | 10-2018-0113187 | A | 15 October 2018 | CN | 108475779 | A | 31 August 2018 |
| | | | | CN | 108475779 | B | 23 March 2021 |
| | | | | CN | 113224274 | A | 06 August 2021 |
| | | | | EP | 3341990 | A1 | 04 July 2018 |
| | | | | EP | 3836261 | A1 | 16 June 2021 |
| | | | | EP | 4286355 | A2 | 06 December 2023 |
| | | | | EP | 4286355 | A3 | 01 May 2024 |
| | | | | EP | 4512791 | A2 | 26 February 2025 |
| | | | | JP | 2018-534720 | A | 22 November 2018 |
| | | | | JP | 2022-153561 | A | 12 October 2022 |
| | | | | JP | 2024-073597 | A | 29 May 2024 |
| | | | | JP | 7115976 | B2 | 09 August 2022 |
| | | | | JP | 7458445 | B2 | 29 March 2024 |
| | | | | JP | 7624539 | B2 | 30 January 2025 |
| | | | | KR | 10-2023-0091915 | A | 23 June 2023 |
| | | | | KR | 10-2023-0092015 | A | 23 June 2023 |
| | | | | KR | 10-2024-0023451 | A | 21 February 2024 |
| | | | | KR | 10-2528934 | B1 | 08 May 2023 |
| | | | | KR | 10-2636894 | B1 | 19 February 2024 |
| | | | | KR | 10-2637617 | B1 | 19 February 2024 |
| | | | | US | 10147950 | B2 | 04 December 2018 |
| | | | | US | 10608254 | B2 | 31 March 2020 |
| | | | | US | 10756347 | B2 | 25 August 2020 |
| | | | | US | 10784512 | B2 | 22 September 2020 |
| | | | | US | 10923722 | B2 | 16 February 2021 |
| | | | | US | 11437621 | B2 | 06 September 2022 |
| | | | | US | 11495798 | B1 | 08 November 2022 |
| | | | | US | 11646419 | B2 | 09 May 2023 |
| | | | | US | 2017-0170477 | A1 | 15 June 2017 |
| | | | | US | 2019-0280298 | A1 | 12 September 2019 |
| | | | | US | 2020-0075954 | A1 | 05 March 2020 |
| | | | | US | 2020-0152983 | A1 | 14 May 2020 |
| | | | | US | 2020-0365896 | A1 | 19 November 2020 |
| | | | | US | 2022-0231296 | A1 | 21 July 2022 |
| | | | | US | 2022-0352517 | A1 | 03 November 2022 |
| | | | | US | 2023-0058348 | A1 | 23 February 2023 |
| | | | | WO | 2017-040299 | A1 | 09 March 2017 |
| KR | 10-2023-0082028 | A | 08 June 2023 | CN | 116457309 | A | 18 July 2023 |
| | | | | EP | 4222109 | A1 | 09 August 2023 |
| | | | | JP | 2023-544717 | A | 25 October 2023 |
| | | | | US | 12046744 | B2 | 23 July 2024 |

Form PCT/ISA/210 (patent family annex) (July 2022)

**INTERNATIONAL SEARCH REPORT**
Information on patent family members

International application No.

**PCT/KR2024/096820**

| Patent document cited in search report | | | Publication date (day/month/year) | Patent family member(s) | | | Publication date (day/month/year) |
|---|---|---|---|---|---|---|---|
| | | | | US | 2023-0246176 | A1 | 03 August 2023 |
| | | | | US | 2023-0304151 | A1 | 28 September 2023 |
| | | | | US | 2024-0258509 | A1 | 01 August 2024 |
| | | | | WO | 2022-072715 | A1 | 07 April 2022 |
| WO | 2023-093893 | A1 | 01 June 2023 | CN | 116190581 | A | 30 May 2023 |
| | | | | CN | 116525776 | A | 01 August 2023 |
| | | | | EP | 4343889 | A1 | 27 March 2024 |
| | | | | JP | 2024-522950 | A | 24 June 2024 |
| | | | | KR | 10-2024-0113824 | A | 23 July 2024 |
| | | | | US | 2024-0290956 | A1 | 29 August 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230179544